# EUROPEAN PATENT APPLICATION

(11) **EP 1 573 576 A1**
(43) Date of publication of application: **14.09.2005**
(21) Application number: 03779643.0
(22) Date of filing: 21.11.2003
(51) Int. Cl.: G06F 17/00

(54) **MOTOR VEHICLE IDENTITY ANTI-FAKE APPARATUS AND METHOD**

(30) Priority: 23.11.2002 CN 02152547
(71) Applicant: Dong, Wenming, Shanxi 030013 (CN)
(72) Inventor: DONG, Wenming, Taiyuan, Shanxi 030013 (CN); DONG, Guangming, Shanxi 030001 (CN)
(74) Representative: Habasque, Etienne J. Jean-François
(86) International application number: PCT/CN2003/000987
(87) International publication number: WO 2004/049184

(57) **Abstract**

The present invention discloses a motor vehicle identity anti-fake apparatus and method. The motor vehicle identity includes a microcomputer (1), communicators (2), member anti-fake apparatus (3) and information displays (4). Each of the member anti-fake apparatus (3) has a data and cipher memory and is installed on vehicle license and other members via legal registration. By means of the microcomputer in the management center or detection station, the identity status of vehicle is monitored automatically, which identity status including the true and false of license and whether license and vehicle is matched, whether main member of vehicle and color, design, frame and size of body of vehicle relevant is matched with those of in legal registration, whether vehicle has passed through prescribed examination on time, whether the vehicle has certain specific usage, whether the vehicle belongs to particularly tracked by related enforcement organ, and communication and intuitionistic display is used to provide related information to outside. The present invention is used for anti-fake of motor-vehicle-identity-status and provides to the law administration for recognizing the legal status of motor-vehicle-identity.

## Description

### Technical Field of the Invention

The present invention relates to an apparatus and method for monitoring and providing the legality of a motor vehicle identity status to outside by using microcomputer and communication technology, and belongs to the field of identity anti-fake and automatic identification for a motor vehicle.

### Description of the Related Art

The legality of a motor vehicle identity is a broad conception and generally comprises the following aspects: whether the license plate itself is true or false and whether it is in conformity with the vehicle; whether the main configuration, members and face color, pattern of the vehicle are in conformity with those of in legal enrollment and registration; whether the vehicle has passed the verification and check with respect to stipulated items on schedule; whether the source and usage of the vehicle are legal, and the like.

The identification of legality of a road vehicle identity is a difficulty not solved for a long time both domestically and abroad.

According to corresponding law, only legal vehicles are allowed to drive on road. However, for lacking of a good monitoring and prevention method at present, it is generally hard for corresponding administrative institution to know and control the legality condition of the driving vehicle, so that the illegal vehicle, for example including the situations of false license plate, license plate inconformity, illegal repack, illegal operation, counterfeiting of a specific identity, evasion of stipulated fees, theft of vehicles, the verification and check period overrun, etc., cannot be forbidden.

The current methods for detecting the identity legality of a road vehicle may be classified into two categories, both having the following main defects.
1. Direct detection. In this type of method, a vehicle is stopped and the license plate, the vehicle and related certificates are synthetically detected. This is a standard method with accuracy and thoroughness, but it is mainly manually operated, is time consuming and toilsome and thus has low efficiency. This method is particularly prone to being restricted by various subjective and objective factors and thus generally cannot be efficiently implemented. Therefore, except for being at special places or in special conditions, this kind of method cannot be the mainstream method for determining the legality of the identity of a vehicle on road.
2. Indirect detection. In this type of method, the legality of the driving vehicle is indirectly judged by monitoring the license plate (or logo, the same below). Since this kind of method is based on license plate identification technology without detecting the vehicle and related certificates, judging the defects of the vehicle depending on such kind of method necessarily leads to low accuracy, and can only obtain uncertain conclusions, particularly cannot confirm that the identity of the vehicle is legal. Moreover, this kind of method has high demands for ground detection apparatus, specially the computer network and state database, and thus, in the regions having no ground detection apparatus or being incompletely provided ground detection apparatus, this type of method will not obtain any effect, and the defection cannot be implemented without omission. For example, a radio frequency communication system is disclosed in Chinese Patent Application No. CN1305911A, published on Aug. 1, 2001 and entitled "automobile electronic license plate system", and the system comprises automobile electronic license plate apparatus and automobile electronic license plate detection apparatus. According to the descriptions of the specification of the application, said system has the function of quickly identifying and finding remarkable features of the vehicle, as well as the function of automobile logo anti-fake. However, as can be seen from the technical solution, the remarkable features substantively only relate to an outside "logo" of the vehicle and can only be regarded as a reference for identifying the vehicles, and can not make it sure to accurately identify and find the vehicle. This system especially can not confirm that the identify of the vehicles is legal, and the system does not have the anti-fake function with respect to the vehicle and the logo. Said system cannot obtain any effect in regions having no ground detection apparatus.

At present, the illegal vehicle on road cannot be detected or prevented and a variety of detecting methods have many defects, and the reasons lie in that first, the illegal vehicle is generally in a "hidden" state, and the legality status of the vehicle identify cannot be judged from the appearance of the vehicle; second, the present license plate can only directly illustrates its own feature, but does not make it sure technically that the license plate itself legally corresponds to the vehicle, specially does not have the function of directly reflecting the virtual status of the vehicle identity.

### Summery of the Invention

Resolving the difficulty of judging the identity legality of a road vehicle and creating better conditions for timely finding and preventing illegal vehicles cannot be achieved by making improvements to the existing methods, but by a new technical solution designed to eliminate the source of the difficulty. The present invention exactly solves the above difficulty. According to the present invention, a device is mounted on an appropriate position of the vehicle for automatically monitoring, analyzing and judging the vehicle itself, the license plate and related certificates and providing to outside the resulting information of the above said self detection, wherein the administrative institution input in advance the electronic archives of the vehicle identity into a microcomputer of said device. The present invention thus overcomes the defects in the prior art, and the administrative institution can adopts relatively simple detecting apparatus, even by means of manual vision, to detect or observe the vehicles on road in a state without stopping the vehicles, resulting in advantageous effect similar to the above said method of "stopping the vehicle for detection", i.e. the method of direct detection.

The technical solution of the present invention is described as follows.

### 1. The Configuration of the Anti-fake Apparatus for Motor Vehicle Identity

The anti-fake apparatus for motor vehicle identity comprises four parts: member anti-fake means, a microcomputer, information displays and communicators. The power supply for the system operation directly comes from the vehicle power supply.
(1) Each of the member anti-fake means is a memory IC chip for storing cipher data and authentication logic, and its data input/output interface is connected to the communication interface of the microcomputer via wires; the front and rear license plates and respective members legally enrolled and registered are respectively provided with respective member anti-fake means; the respective member anti-fake means may be fixed on the license plates of the vehicle and respective legally enrolled and registered member in a sticking and covering seal manner. Each of the member anti-fake means is integrated with respective license plates or members to form a whole body, and if such a combination is broken, the member anti-fake means will be damaged, and the microcomputer will immediately find this damage. The object for doing so is to prevent the license plates or the legally enrolled and registered members from being replaced illegally. By means of the connection between the microcomputer and respective member anti-fake means, respective license plates and legally enrolled and registered members of the vehicle are combined into an integral information system, and thus the reliability of the relation between the license plates, the members and the vehicle may be assured.
(2) Each of the member anti-fake means may also employ a chip and antenna of a noncontact IC card, and is in signal connection with said microcomputer through a noncontact IC card read/write unit, wherein said noncontact IC card read/write unit is in signal connection with said chip and antenna of said concontact IC card in a radio frequency communication manner, and a communication interface of said noncontact IC card read/write unit is connected to said communication interface of said microcomputer by wires; said noncontact IC card read/write unit is mounted at a position that has no signal shielding object and is within a valid range for communication with said chip and antenna of said noncontact IC card. Said member anti-fake means can also be read by an external legal read/write unit when it employs the chip and antenna of said concontact IC card.
(3) The microcomputer comprises a microprocessor, a memory and communication interfaces. The memory comprises a memory for storing programs and data and a random access memory. The microcomputer may be mounted inside the vehicle or into the license plate body outside the vehicle.
(4) The communicators are wireless bidirectional communication apparatus. At least a set of communicator is indispensable, preferably two sets, wherein one set performs short distance radio communication with the roadside detection station, and the other set performs long distance wireless communication directly with the management center within a range of certain region.
(5) Information displays comprise three types of displays, i.e., colorful light information displays, acoustic information display and screen display. The colorful light information displays adopt at least four electrical light-emitting means, which are mounted on an place where optical signal can be observed directly and clearly by eyes of a person outside, and the control input interfaces of these electrical light-emitting means are connected to the communication interfaces of the microcomputer via wires; the acoustic information display adopts at least one electrical sounding means, which is mounted on a place where acoustic signal can be obviously heard by a person outside, and the control input interface of the acoustic information display is connected to the communication interface of the microcomputer via wires; the screen display adopts an electronic screen means packaged into a cartridge, which cartridge is mounted on the upper surface of the operating board in front of the driver inside the vehicle, and the control input interface of the screen display is connected to the communication interface of the microcomputer via wires.

The colorful light information displays and acoustic information display can also be connected to the microcomputers respectively via an acoustooptic controller, and the communication interface of each of the acoustooptic controller is connected to the communication interface of the microcomputer via wires; the output port of the acoustooptic controller is directly connected to the wiring port of respective colorful light information displays or the acoustic information display, and the connection ports and the acoustooptic controller are packaged into an integral closed body by insulating material.

Each of the acoustooptic controller is a microcomputer system having an acoustooptic drive module, and comprises CPU, ROM, RAM, I/O, a communication interface, an acoustooptic drive module and an output port. The acoustooptic controllers provide drive power for the information display, and importantly, they prevent the pseudo control signal from entering the information display to lead to information displaying distortion by means of the close connection and seal between the acoustooptic controllers and the wiring ports of the information displays. If such close connection and seal is broken, the acoustooptic controller will be damaged, which damage is thereby immediately observed by the microcomputer.

The screen display, communicators, microcomputer, colorful light information displays, acoustic information display and the like, may be packaged into a cartridge which is mounted on the upper surface of the operating board in front of the driver inside the vehicle.

### 2. The Body of the License Plate Serves as the Base and Casing of Part of the Members of the Vehicle Identity Anti-fake Apparatus

The member anti-fake means, read/write unit, information displays and microcomputer, communicators may be mounted and packaged into the body of the license plate; the body of the license plate serves as the base and casing of part of the members of the vehicle identity anti-fake apparatus and should be made from insulating material; the front face of the license plate body is provided with windows through which the colorful light information displays radiate color light signal to outside, and the rear or side of the license plate body is provided with a cable interface which serves as an interface connecting the components inside the license plate body and the components outside the license plate body and the power supply of the vehicle.

### 3. The Technical Requirements for the Outside Management Center or Detection Station

In order to sufficiently develop the function of the motor vehicle identity anti-fake apparatus, the outside management center or detection station employ the following methods to manage and control the operation of the apparatus.
(1) Through a wired connection between the communication interface of the computer in the management center and the communication interface of the microcomputer of the motor vehicle identity anti-fake apparatus, the management center installs and configures operation programs and information process software in the memory of the microcomputer of the motor vehicle identity anti-fake apparatus, and writes necessary vehicle archive information into the memory whenever necessary; at the same time, the management center can extract and query the operation record information stored in the microcomputer of the motor vehicle identity anti-fake apparatus.
(2) The management center or detection station normally manages and controls the operation of the motor vehicle identity anti-fake apparatus in a wireless communication manner.
(3) The microcomputer of the motor vehicle identity anti-fake apparatus corrects its inner clock, and standard time information timely issued by the outside management center or detection station in a wireless communication manner is thus indispensable. Whether or not the time of the inner clock is correct will influence results of several monitoring items and operating records. In order to prevent inaccuracy of the time of the inner clock of the microcomputer of the motor vehicle identity anti-fake apparatus caused by long period of stagnation of drive of the vehicle, external signal is needed to force the microcomputer to correct the time.
(4) When the detection station checks whether the color, pattern, configuration and size of the vehicle is in conformity with those of in the enrollment and registration, it is needed to take the present image of the vehicle and transmit the vehicle image information or vehicle image feature information to the motor vehicle identity anti-fake apparatus in a wireless communication manner.
(5) When the management center needs to check the present location of a vehicle or reveal that a vehicle is particularly tracked by related enforcement organ, it is required to issue a query instruction and the identity code of the vehicle in a wireless communication manner.

### 4. The Method, Steps and Contents for Transmitting Information to Outside by the Communicators

(1) After the motor vehicle identity anti-fake apparatus is powered on, the receiver of each of the communicators is in a status of normal open and is monitored and controlled by the microcomputer.
(2) Upon detecting that the communicator has received a legal call issued by the communicator of the management center or detection station, the microcomputer stores a set of information transmitted by the communicator of the management center or detection station in the memory.
(3) The microcomputer judges the newly stored information to determine whether there exists a detection demand or a question query information.
(4) If there exists, said microcomputer further judges identity authority of the person who transmits the information.
(5) Finally, based on the identity authority of the caller, the microprocessor of the microcomputer selects necessary information from the memory, processes and generates reply information, and controls the communicators to transmit said information, as stipulated by the predetermined program.
(6) The information as stored in the memory of the microcomputer of the motor vehicle identity anti-fake apparatus comprises monitoring result information on current legality status of the present vehicle identity, the vehicle archive information, operation records of monitoring process made by the motor vehicle identity anti-fake apparatus in a period of time on the legality status of the present vehicle identity, records of the detection made by the management center and the detection station for the present vehicle on the query items, procedure and time. All records are automatically updated under the control of the built-in programs.

### 5. The Method and Contents for Displaying Information by the Information Displays

Under the direct control of the microcomputer, the information displays adopt the following manner to intuitively display the information of vehicle identity.
(1) The colorful light information displays represents specific information associated with the legal status of the vehicle identity using different position relation, color or flicker frequency of light.
(2) The acoustic information display represents that the identity of the vehicle currently exists an illegal status using sound signal.
(3) The screen display represents the information on present status of the vehicle identity and corresponding archive information using graphics and text.

### 6. The Method for Correcting Time

The microcomputer corrects its inner clock based on the legal standard time information received by the communicator. And the specific method comprises the following steps: after the communicators have received the legal standard time information issued by the wireless transmitter of the management center or detection station, the microcomputer storing the information in its memory based on identification result, and setting said standard time as the present time of its inner clock under the control of the built-in program.

### 7. The Method for Monitoring the Legality of the Motor Vehicle Identity

(1) Judging the legality of the license plate and main members of the vehicle.
   Each of the member anti-fake means and the feature of the information stored therein are unique, and respective member anti-fake means is integrated with respective license plates or vehicle members to form a integral body which can serve as a feature sign for identifying the identities of the license plates or main members of the vehicle. Since the respective member anti-fake means is sealed and fixed on the license plates or the vehicle members, and has poor ability of against mechanical damage, if the connection between the member anti-fake means and the license plates or vehicle members is broken, for example, by illegally replacing the license plates or main members of the vehicle, or by moving the member anti-fake means, the member anti-fake means will be damaged and its internal feature information will be lost. The microcomputer uses each of said member anti-fake means and features of information stored in the microcomputer as feature signs for identifying identities of respective license plates or members of the vehicle. The memory of the microcomputer stores feature information of the respective member anti-fake means and the part represented by said respective anti-fake means. When judging the legality of respective license plates or members of said vehicle, said microcomputer first extracts the information of said member anti-fake means and enters it into said memory of the microcomputer; then compares it with said previously stored feature information of the respective member anti-fake means; if the comparison result is consistent, it indicates that the identity of the license plates or members as represented by said member anti-fake means is legal; if the comparison result is inconsistent or the feature information of some member anti-fake means does not exist, it means that the identity of corresponding license plates or members is illegal.
(2) Judging whether the motor vehicle has passed the verification and check with respect to stipulated items on schedule.
   The microcomputer retrieves time when related items passed the verification and check at the latest time and the period of validity of said items from vehicle archive information stored in the microcomputer, and compares said period of validity with the present date of the inner clock of the microcomputer; if the present date falls within the period of validity, it means that the vehicle has passed the verification and check with respect to the stipulated items on schedule; otherwise, it means that the vehicle has not passed the verification and check with respect to the stipulated items on schedule.
(3) Judging whether the motor vehicle has special usages or not:
   The microcomputer retrieves and judges information on usage of the vehicle and period of validity of the usage from the vehicle archive information stored in the microcomputer. If there exists some special usage and the present date falls within the period of validity, it means that the vehicle has a certain type of special usage; otherwise, it means that the vehicle has no certain type of special usage.
   The special usage is defined by the management center, for example including the police car, the taxi, or the like.
(4) Judging to determine whether the present vehicle belongs to the vehicle particularly tracked by related enforcement organ.
   The enforcement organ presets in said microcomputer a calling cipher for the vehicle identity anti-fake apparatus of the particularly tracked vehicle. If the communicator receives the calling cipher of the vehicle identity anti-fake apparatus of the particularly tracked vehicle, said microcomputer compares the calling cipher with the calling cipher of the particularly tracked vehicle stored in its memory. If the comparison result is confirmative, it means that the present vehicle belongs to the vehicle particularly tracked by the related enforcement organ.
   The vehicle particularly tracked are the vehicles that are looked for or controlled by the related enforcement organ for some reasons, for example, the particularly tracked vehicles include the robbed cars and stolen cars.
(5) Judging whether the appearance color, pattern, configuration and size of the present vehicle are in conformity with those of in the enrollment and registration.

The microcomputer stores real-time image or feature information of the present vehicle, which is transmitted from external detection station and received by said communicators, in the memory. The microcomputer compares the received information with the image feature of the present vehicle in the vehicle archive information stored in said memory. If the comparison result is consistent, it means that the related items of the present vehicle are in conformity with those of in the enrollment and registration; otherwise, it means that they are in no conformity.

The present invention substantively supplements and improves the function of the license plate, or provides an intellectual "ID card" of a vehicle which reflects the legality status of the vehicle identity. The present invention overcomes defect of the prior art, not only enabling the license plate itself to possess the function of anti-fake, but also ensuring the reliable correspondence between the license plate and the vehicle, and thus the present invention has the function of reflecting the legality status of the vehicle identity. The present invention radically resolves the problem of identification of the basic information of the vehicle and possesses various information representation modes, and it plays an important role in the vehicle management, traffic management of state road and other fields related with the identification of vehicle identity. More specifically, the present invention at least has the following three remarkable effects.
(1) The present invention resolves the difficulty of judging the legality status of the identities of the vehicles on road, and provides a precondition for related management institutions to accurately judge the legality of a vehicle without stopping it. Since the present invention outputs to outside the detection conclusion information directly, the demands for the ground supporting detection apparatus are simple, and the management cost is largely reduced. In particular, the visual identification by naked eye is simply implemented, and these exists no detection omission nationwide.
(2) The present invention changes the passive situation in which the management institution can not master the legality status of the driving vehicles, and provides a precondition to achieve intelligentization, informatization and real-time of the road vehicle management.
(3) The present invention achieves the policy of "give first rank to prevention". Since the appearance of the illegal vehicle will automatically present remarkable identification signs which are hard to hide, people who drive the illegal vehicles are heavily deterred, so that the illegal vehicles are prevented from occurring and being driven on road, thereby vehicle-related crimes will be reduced markedly.

### Brief Description of the Drawings

Figure 1 is a principle chart of the configuration of the motor vehicle identity anti-fake apparatus according to the present invention.

Components: member anti-fake means 3; communicators 2; information displays 4; microcomputer 1.

Figure 2 is a principle chart of each of the member anti-fake means 3-1 and 3-2 according to an embodiment as shown in Figure 4.

Components: memory 301 for storing cipher and cipher authentication logic and data; data input/output interface 302.

Figure 3 is a principle chart of each of the member anti-fake means 3-3 and 3-4 according to the embodiment as shown in Figure 4.

Components: memory 301; encryption and decryption module 303; rectifying and voltage-modulating module 304; data encoding and transmitting module 305; signal and clock extracting module 306; high-frequency signal receiving and transmitting module 307; antenna 308; microprocessor and monitoring program 309.

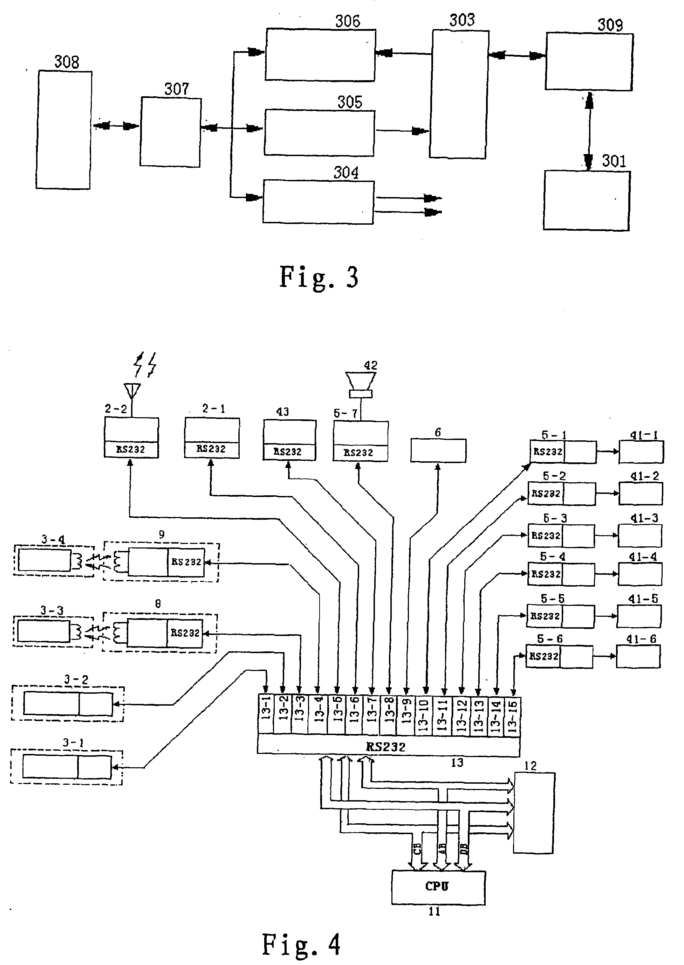

Figure 4 is a principle chart of the motor vehicle identity anti-fake apparatus according to an embodiment.

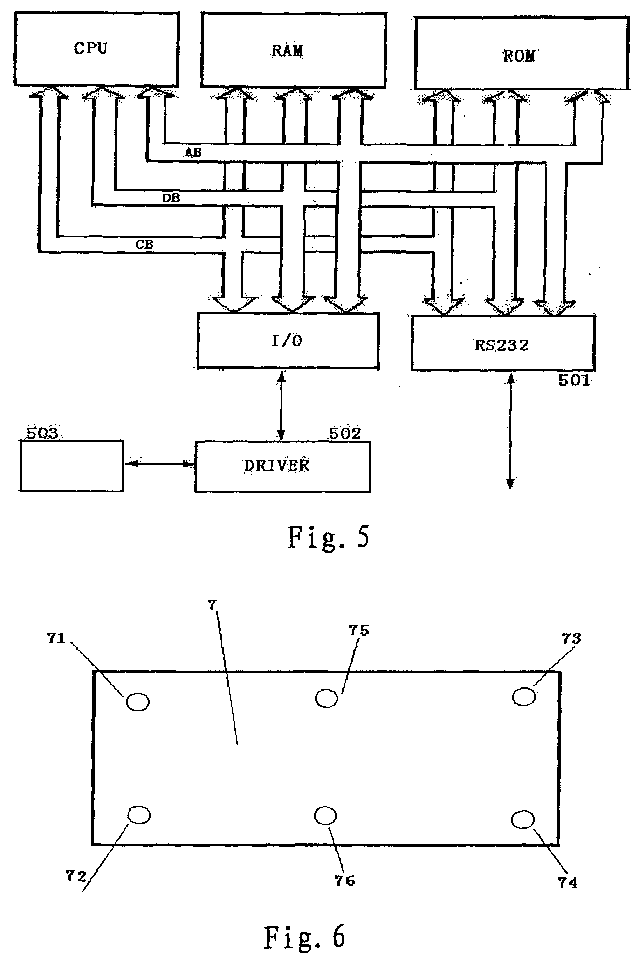

Figure 5 is a principle chart of each of the acoustooptic controller according to the embodiment as shown in Figure 4.

Components: CPU, ROM, RAM, I/O, a communication interface 501, an acoustooptic drive module 502 and an output port 503.

Figure 6 shows six window positions of the front license plate body 7 according to the embodiment as shown in Figure 4.

The surface of the front license plate body 7 is provided with 6 windows, respectively indicated by windows 71, 72, 73, 74, 75, 76.

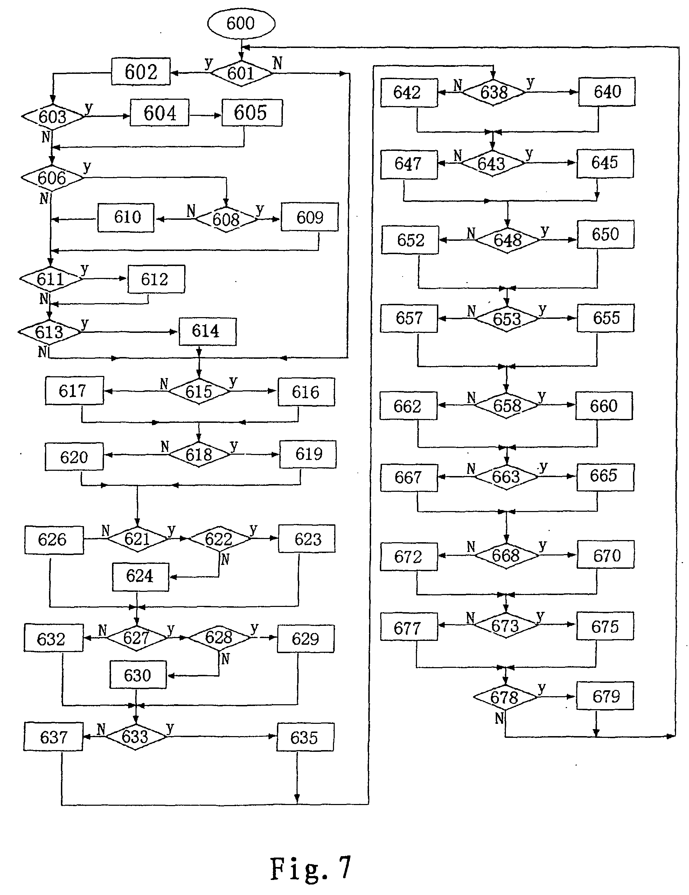

Figure 7 is a main flow chart of the operation program of the microcomputer 1 according to the embodiment as shown in Figure 4.

### Description of the Preferred Embodiment

The present invention is further described in details as follows in association with figures and embodiments.

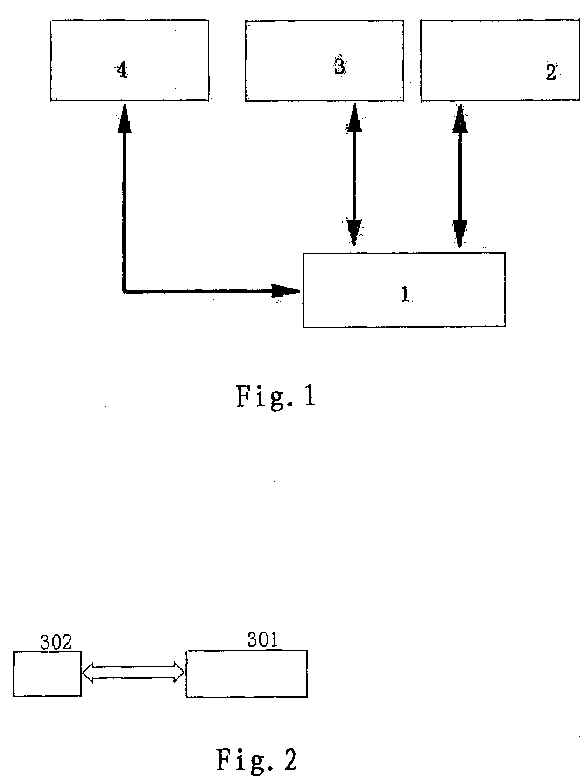

Figure 1 is a principle chart of the configuration of the motor vehicle identity anti-fake apparatus according to the present invention.

As for the functions of respective components of the motor vehicle identity anti-fake apparatus, the member anti-fake means 3 serve for monitoring the identity status of each license plate or main member of a vehicle, the communicators 2 serve for communicating with the external management center and detection station in a wireless manner, the information displays 4 intuitively provide to outside main information which reflects the identity status of a vehicle; microcomputer 1 is a center for storing and processing information, and controlling operation of the motor vehicle identity anti-fake apparatus. The functions of the present invention are achieved under the cooperation of the above said four parts.

Figure 2 is a principle chart of each of the member anti-fake means 3-1 and 3-2 according to the embodiment as shown in Figure 4.

Each of the member anti-fake means 3-1 and 3-2 comprises a data input/output interface 302, a memory 301 for storing cipher, cipher authentication logic and data.

Figure 3 is a principle chart of each of the member anti-fake means 3-3 and 3-4 according to the embodiment as shown in Figure 4.

Each of the member anti-fake means 3-3 and 3-4 adopts a noncontact IC card circuit, comprising a memory 310, an encryption and decryption module 303, a rectifying and voltage-modulating module 304, a data encoding and transmitting module 305, a signal and clock extracting module 306, a high-frequency signal receiving and transmitting module 307, an antenna 308, a microprocessor and monitoring program 309.

Figure 4 is a principle chart of an embodiment of the motor vehicle identity anti-fake apparatus.

The anti-fake means 3 comprise four member anti-fake means 3-1, 3-2, 3-3, 3-4, which four member anti-fake means are respectively stuck and sealed with epoxy resin onto the front license plate, the car frame, the engine and the back surface of the rear license plate. The member anti-fake means 3-1 and 3-2 adopt a memory IC chip storing thereon cipher, cipher authentication logic and data, and each of the anti-fake means has a data input/output interface. The data input/output interface of the member anti-fake means 3-1 is connected to the communication interface 13-1 of microcomputer 1 via wires, the data input/output interface of the member anti-fake means 3-2 is connected to the communication interface 13-2 of microcomputer 1 via wires. The member anti-fake means 3-3 and 3-4 each adopts a noncontact IC card chip and its antenna.

Read/write unit 8 and read/write unit 9 each adopts a noncontact IC card read/write chip and its antenna and communication interface, and is respectively stuck and sealed with epoxy resin on a position within 10cm in the vicinity of member anti-fake means 3-3 and 3-4, and is respectively responsible for reading/writing from/into member anti-fake means 3-3 and 3-4. The communication interface of read/write unit 8 is connected to the communication interface 13-3 of microcomputer 1 via wires, and the communication interface of read/write unit 9 is connected to the communication interface 13-4 of microcomputer 1 via wires.

Microcomputer 1 comprises a microprocessor 11, a memory 12, communication interfaces 13, and is mounted within the body 7 of the front license plate. The microprocessor 11 operates at a clock frequency of 1GHz. The memory 12 comprises a memory for storing programs and data, and a random access memory. The interfaces 13 have 15 independent communication interfaces indicated respectively as communication interfaces 13-1, 13-2, 13-3, 13-4, 13-5, 13-6, 13-7, 13-8, 13-9, 13-10, 13-11, 13-12, 13-13, 13-14 and 13-15, and all these communication interfaces employ serial communication interface RS232.

A peripheral communication socket 6 is connected to the communication interface 13-9 of microcomputer 1 and mounted on the side face of the front license plate body 7, and is used to supply wired connection communication between the computer of the management center and microcomputer 1 whenever necessary.

The communicators 2 comprise communicators 2-1 and 2-2. The communicator 2-1 is a radio frequency communicator, and it adopts an "electronic label" radio frequency communication circuit of a highway no-stop charging system. The controller of the communicator 2-1 is provided with a RS232 communication interface which is connected to the communication interface 13-6 of microcomputer 1. The communication between said communicator 2-1 and the detection station on the roadside is controlled by the microcomputer 1. The communicator 2-2 is a wireless communicator which communicates with the management center, and it adopts a miniature ultrashort wave transceiver having a communication interface. The communication interface of the controller of the communicator 2-2 is connected to the communication interface 13-5 of microcomputer 1, and the communication between said communicator 2-2 and the management center is controlled by the microcomputer 1.

The colorful light information displays 41 comprise six colorful light information displays indicated respectively as 41-1, 41-2, 41-3, 41-4, 41-5 and 41-6, which six colorful light information displays employ light-emitting diodes. The single acoustic information display 42 employs an electronic speaker.

The acoustooptic controllers 5 comprise seven controllers indicated respectively as 5-1, 5-2, 5-3, 5-4, 5-5, 5-6 and 5-7. The output ports of the seven controllers are respectively connected to wiring ports of colorful light information displays 41-1, 41-2, 41-3, 41-4, 41-5, 41-6 and acoustic information display 42, and the respective connection ports and the acoustooptic controller chip are stuck and sealed by epoxy resin as a whole body which is then mounted into the front license plate body 7. The communication interfaces of acoustooptic controllers 5-1, 5-2; 5-3, 5-4, 5-5, 5-6 and 5-7 are respectively connected to the communication interfaces 13-10, 13-11, 13-12, 13-13, 13-14, 13-15 and 13-18 of microcomputer 1.

The screen display 43 adopts a crystal liquid display, and its communication interface is connected to the communication interface 13-7 of microcomputer 1.

The screen display 43 and the communicator 2-2 are packaged into a cartridge which is mounted on the upper surface of an operating board in front of the driver inside the vehicle.

Figure 5 is a principle chart of each of the acoustooptic controller 5 according to the embodiment as shown in Figure 4. Each of the acoustooptic controller 5 is a microcomputer system having an acoustooptic drive module, and comprises MPU, ROM, RAM, I/O, a communication interface 501, an acoustooptic drive module 502 and an output port 503.

Figure 6 shows six window positions of the front license plate body 7 according to the embodiment as shown in Figure 4.

The front license plate body 7 is provided with six windows on the surface, indicated respectively as windows 71, 72, 73, 74, 75, 76, and colorful light information display 41-1, 41-2, 41-3, 41-4, 41-5 and 41-6 are respectively mounted inside the body. The windows are used for radiating color light outward, wherein colorful light information displays 41-1, 41-2, 41-3, 41-4, 41-5 are light-emitting diodes which emit green light. When the colorful light information display 41-1 emits light, it means that the license plate, the car frame and the engine are legal; when the colorful light information display 41-1 dose not emit light, it means that the license plate or the car frame or the engine are illegal. When the colorful light information display 41-2 emits light, it means that the vehicle has passed the verification or check with respect to all stipulated items on schedule; when the colorful light information display 41-2 does not emit light, it means that the vehicle has failed to pass the verification or check with respect to some of the stipulated items. When the colorful light information display 41-3 emits light, it means that the color, pattern, configuration and size of the vehicle are in conformity with those on in the enrollment and registration; when the colorful light information display 41-3 does not emit light, it means that the color, pattern, configuration and size of the vehicle are not in conformity with those of in the enrollment and registration. When the colorful light information display 41-4 emits light, it means that the present vehicle does not belong to the vehicle particularly tracked by related enforcement organ; when the colorful light information display 41-4 does emit light, it means that the present vehicle belongs to the vehicle particularly tracked by related enforcement organ. When the colorful light information display 41-5 emits light, it means that the vehicle has some special usage; when the colorful light information display 41-5 does not emit light, it means that the vehicle does not have some special usage. The colorful light information display 41-6 is a light-emitting diode which emits red light. When the colorful light information display 41-6 emits light, it means the vehicle has an illegal identity; when the colorful light information display 41-6 does not emit light, it means nothing.

Figure 7 is a main flow chart of the operation program of the microcomputer 1 according to the embodiment as shown in Figure 4.

The operation of each step is described sequentially in details as follows:
1. the vehicle being powered on, and the motor vehicle identity anti-fake apparatus and the microcomputer 1 immediately starting to work (600);
2. making check to determine whether or not the communicators 2-1 and 2-2 receive legal calling information (601);
3. if a legal call is received, writing this set of information having the legal call into the memory 12 (602);
4. making check to determine whether or not the information written into the memory 12 has a detection command or questioning query information of the management center or the detection station (603);
5. if there exists a detection command or questioning query information, determining the authority of the management center or the detection station (604);
6. organizing reply information according to the authority of the management center or the detection station, and controlling the communicator 2-1 or 2-2 to transmit the reply information and writing the operation records into the memory 12 (605);
7. making check to determine whether or not the information newly written into the memory 12 has the vehicle image feature information transmitted from the detection station (606);
8. if there exists the vehicle image feature information, comparing said vehicle image feature information with the present vehicle image feature in the vehicle archive information in the memory, and writing the comparison result into the memory 12 (608);
9. if said comparison result is consistent, transmitting an instruction of switching on the colorful light information display 41-3 to the acoustooptic controller 5-3, controlling the screen display 43 to describe in graphics and text that the color, pattern, configuration and size of the vehicle are consistent with those of in the enrollment and registration, and writing the operation records into the memory 12 (609);
10. if said comparison result is inconsistent, transmitting an instruction of switching off the colorful light information display 41-3 to the acoustooptic controller 5-3; transmitting an instruction of switching on the colorful light information display 41-6 to the acoustooptic controller 5-6; transmitting an instruction of switching on the acoustic information display 42 to the acoustooptic controller 5-7; controlling the screen display 43 to describe in graphics and text that the color, pattern, configuration and size of the vehicle being inconsistent with those of in the enrollment and registration, and writing the operation records into the memory 12 (610);
11. making check to determine whether or not the information newly written into the memory 12 has standard time information (611);
12. if there eixsts standard time information, setting said standard time as the present time of the inner clock of the microcomputer 1 itself (612);
13. making check to determine whether or not the information newly written into the memory 12 has the name of the present vehicle particularly tracked by the management center (613);
14. if there exists the name of the present vehicle particularly tracked by the management center, transmitting an instruction of switching on the colorful light information display 41-6 to the acoustooptic controller 5-6; transmitting an instruction of switching off the colorful light information display 41-4 to the acoustooptic controller 5-4; transmitting an instruction of switching on the acoustic information display 42 to the acoustooptic controller 5-7; controlling the screen display 43 to describe in graphics and text that the vehicle belongs to vehicle particularly tracked by the related enforcement organ; writing the operation records into the memory 12 (614);
15. judging to determine whether or not the vehicle has passed the verification and check with respect to stipulated items on schedule, and writing the judging result into the memory 12 (615);
16. if the vehicle has passed the verification and check with respect to stipulated items on schedule, transmitting an instruction of switching on the colorful light information display 41-2 to the acoustooptic controller 5-2; controlling the screen display 43 to describe in graphics and text that the vehicle has passed the verification and check with respect to stipulated items on schedule (616);
17. if the vehicle has not passed the verification and check with respect to stipulated items on schedule, transmitting an instruction of switching off the colorful light information display 41-2 to the acoustooptic controller 5-2; transmitting an instruction of switching on the acoustic information display 41-6 to the acoustooptic controller 5-6; transmitting an instruction of switching on the acoustic information display 42 to the acoustooptic controller 5-7; controlling the screen display 43 to describe in graphics and text that the vehicle has not passed the verification and check with respect to stipulated items on schedule (617);
18. judging to determine whether or not the vehicle has some special usages, and writing the judging result into the memory 12 (618);
19. if the vehicle has some special usages, transmitting an instruction of switching on the colorful light information display 41-5 to the acoustooptic controller 5-5; controlling the screen display 43 to describe in graphics and text the special usage that the vehicle has (619);
20. if the vehicle has no special usages, transmitting an instruction of switching off the colorful light information display 41-5 to the acoustooptic controller 5-5;
21. checking to determine whether or not there exists correct information of the read/write unit 8 (621);
22. if there exists correct information of the read/write unit 8, checking to determine whether or not there exists correct identification information of the member anti-fake means 3-3 (622);
23. if there exists correct identification information of the member anti-fake means 3-3, controlling the screen display 43 to describe in graphics and text that the identity of the vehicle engine is legal; transmitting an instruction of switching on the colorful light information display 41-1 to the acoustooptic controller 5-1 only when the operation records contain the correct information of the other three member anti-fake means 3-1, 3-2 and 3-4 at the same time; writing the monitoring operation records into the memory 12 (623);
24. if there does not exist correct identification information of the member anti-fake means 3-3, transmitting an instruction of switching off the colorful light information display 41-1 to the acoustooptic controller 5-1; transmitting an instruction of switching on the colorful light information display 41-6 to the acoustooptic controller 5-6; transmitting an instruction of switching on the acoustic information display 42 to the acoustooptic controller 5-7; controlling the screen display 43 to describe in graphics and text that the identity of the vehicle engine is illegal, and writing the monitoring operation records into the memory 12 (624);
25. if there does not exist correct information of the read/write unit 8, transmitting an instruction of switching off the colorful light information display 41-1 to the acoustooptic controller 5-1; transmitting an instruction of switching on the colorful light information display 41-6 to the acoustooptic controller 5-6; transmitting an instruction of switching on the acoustic information display 42 to the acoustooptic controller 5-7; controlling the screen display 43 to describe in graphics and text that the identity of the vehicle engine is illegal, and writing the monitoring operation records into the memory 12 (626);
26. checking to determiner whether there exists correct information of the read/write unit 9 (627);
27. if there exists correct information of the read/write unit 9, checking whether there exists correct identification information of the member anti-fake means 3-4 (628);
28. if there exists correct identification information of the member anti-fake means 3-4, controlling the screen display 43 to describe in graphics and text that the identity of the rear license plate of the vehicle is legal; transmitting an instruction of switching on the colorful light information display 41-1 to the optical controller 5-1 only when the operation records contain the correct information of the other three member anti-fake means 3-1, 3-2 and 3-3 at the same time; writing the monitoring operation records into the memory 12 (629);
29. if there does not exist correct identification information of the member anti-fake means 3-4, transmitting an instruction of switching off the colorful light information display 41-1 to the acoustooptic controller 5-1; transmitting an instruction of switching on the colorful light information display 41-6 to the acoustooptic controller 5-6; transmitting an instruction of switching on the acoustic information display 42 to the acoustooptic controller 5-7; controlling the screen display 43 to describe in graphics and text that the identity of the rear license plate of the vehicle is illegal, and writing the monitoring operation records into the memory 12 (630);
30. if there does not exist correct information of the read/write unit 9, transmitting an instruction of switching off the colorful light information display 41-1 to the acoustooptic controller 5-1; transmitting an instruction of switching on the colorful light information display 41-6 to the acoustooptic controller 5-6; transmitting an instruction of switching on the acoustic information display 42 to the acoustooptic controller 5-7; controlling the screen display 43 to describe in graphics and text that the identity of the rear license plate of the vehicle is illegal, and writing the monitoring operation records into the memory 12 (632);
31. checking to determine whether there exists correct identification information of the member anti-fake means 3-1 (633);
32. if there exists correct identification information of the member anti-fake means 3-1, controlling the screen display 43 to describe in graphics and text that the identity of the front license plate of the vehicle is legal; transmitting an instruction of switching on the colorful light information display 41-1 to the optical controller 5-1 only when the operation records contain the correct information of the other three member anti-fake means 3-4, 3-2 and 3-3 at the same time; writing the monitoring operation records into the memory 12 and member anti-fake means 3-1 (635);
33. if there does not exist correct identification information of the member anti-fake means 3-1, transmitting an instruction of switching off the colorful light information display 41-1 to the acoustooptic controller 5-1, and transmitting an instruction of switching on the colorful light information display 41-6 to the acoustooptic controller 5-6; transmitting an instruction of switching on the acoustic information display 42 to the acoustooptic controller 5-7; controlling the screen display 43 to describe in graphics and text that the identity of the front license plate of the vehicle is illegal; and writing the monitoring operation records into the memory 12 (637);
34. checking to determine whether there exists correct identification information of the member anti-fake means 3-2 (638);
35. if there exists correct identification information of the member anti-fake means 3-2, controlling the screen display 43 to describe in graphics and text that the identity of the car frame is legal; transmitting an instruction of switching on the colorful light information display 41-1 to the optical controller 5-1 only when the operation records contain the correct information of the other three member anti-fake means 3-4, 3-1 and 3-3 at the same time; writing the monitoring operation records into the memory 12 and member anti-fake means 3-2 (640);
36. if there does not exist correct identification information of the member anti-fake means 3-2, transmitting an instruction of switching off the colorful light information display 41-1 to the acoustooptic controller 5-1, and transmitting an instruction of switching on the colorful light information display 41-6 to the acoustooptic controller 5-6; transmitting an instruction of switching on the acoustic information display 42 to the acoustooptic controller 5-7; controlling the screen display 43 to describe in graphics and text that the identity of the car frame is illegal, and writing the monitoring operation records into the memory 12 (642);
37. checking whether there exists correct identification information of the acoustooptic controller 5-1 (643);
38. if there exists correct identification information of the acoustooptic controller 5-1, writing the monitoring operation records into the memory 12 (645);
39. if there does not exist correct identification information of the acoustooptic controller 5-1, transmitting an instruction of switching on the colorful light information display 41-6 to the acoustooptic controller 5-6; transmitting an instruction of switching on the acoustic information display 42 to the acoustooptic controller 5-7; controlling the screen display 43 to describe in graphics and text that the colorful light information display 41-1 is illegal; and writing the monitoring operation records into the memory 12 (647);
40. checking to determine whether there exists correct identification information of the acoustooptic controller 5-2 (648);
41. if there exists correct identification information of the acoustooptic controller 5-2, writing the monitoring operation records into the memory 12 (650);
42. if there does not exist correct identification information of the acoustooptic controller 5-2, transmitting an instruction of switching on the colorful light information display 41-6 to the acoustooptic controller 5-6; transmitting an instruction of switching on the acoustic information display 42 to the acoustooptic controller 5-7; controlling the screen display 43 to describe in graphics and text that the colorful light information display 41-2 is illegal; and writing the monitoring operation records into the memory 12 (652);
43. checking to determine whether there exists correct identification information of the acoustooptic controller 5-3 (653);
44. if there exists correct identification information of the acoustooptic controller 5-3, writing the monitoring operation records into the memory 12 (655);
45. if there does not exist correct identification information of the acoustooptic controller 5-3, transmitting an instruction of switching on the colorful light information display 41-6 to the acoustooptic controller 5-6; transmitting an instruction of switching on the acoustic information display 42 to the acoustooptic controller 5-7; controlling the screen display 43 to describe in graphics and text that the colorful light information display 41-3 is illegal; and writing the monitoring operation records into the memory 12 (657);
46. checking to determine whether there exists correct identification information of the acoustooptic controller 5-4 (658);
47. if there exists correct identification information of the acoustooptic controller 5-4, writing the monitoring operation records into the memory 12 (660);
48. if there does not exist correct identification information of the acoustooptic controller 5-4, transmitting an instruction of switching on the colorful light information display 41-6 to the acoustooptic controller 5-6; transmitting an instruction of switching on the acoustic information display 42 to the acoustooptic controller 5-7; controlling the screen display 43 to describe in graphics and text that the colorful light information display 41-4 is illegal; and writing the monitoring operation records into the memory 12 (662);
49. checking to determine whether there exists correct identification information of the acoustooptic controller 5-5 (663);
50. if there exists correct identification information of the acoustooptic controller 5-5, writing the monitoring operation records into the memory 12 (665);
51. if there does not exist correct identification information of the acoustooptic controller 5-5, transmitting an instruction of switching on the colorful light information display 41-6 to the acoustooptic controller 5-6; transmitting an instruction of switching on the acoustic information display 42 to the acoustooptic controller 5-7; controlling the screen display 43 to describe in graphics and text that the colorful light information display 41-5 is illegal; and writing the monitoring operation records into the memory 12 (667);
52. checking to determine whether there exists correct identification information of the acoustooptic controller 5-6 (668);
53. if there exists correct identification information of the acoustooptic controller 5-6, writing the monitoring operation records into the memory 12 (670);
54. if there does not exist correct identification information of the acoustooptic controller 5-6, transmitting instructions of switching off the colorful light information display 41-1, 41-2, 41-3, 41-4 to the acoustooptic controllers 5-1, 5-2, 5-3, 5-4; transmitting an instruction of switching on the acoustic information display 42 to the acoustooptic controller 5-7; controlling the screen display 43 to describe in graphics and text that the colorful light information display 41-6 is illegal; and writing the monitoring operation records into the memory 12 (672);
55. checking to determine whether there exists correct identification information of the acoustooptic controller 5-7 (673);
56. if there exists correct identification information of the acoustooptic controller 5-7, writing the monitoring operation records into the memory 12 (675);
57. if there does not exist correct identification information of the acoustooptic controller 5-7, transmitting an instruction of switching on the colorful light information display 41-6 to the acoustooptic controller 5-6; controlling the screen display 43 to describe in graphics and text that the acoustic information display 42 is illegal; and writing the monitoring operation records into the memory 12 (677);
58. checking the communication interface 13-9 to determine whether there exists a legal control signal of the computer of the management center (678);
59. if there exists a legal control signal of the computer of the management center, accepting the control of the computer of the management center for reading/writing information or installing and configuring program software, and making operation records (679);
   after the communication between the computer of the management center and the microcomputer 1 has finished, microcomputer 1 restarting a work cycle;
   if there exists no legal control signal of the computer of the management center, microcomputer 1 entering the next cycle.

## Claims

1. A motor vehicle identity anti-fake apparatus, comprising a communicator (2-1) for performing radio frequency communication with a roadside detection station, **characterized in that** it further comprises member anti-fake means (3), a microcomputer (1) and information displays (4); wherein
each of said member anti-fake means (3) is a memory (301) for storing cipher data and authentication logic, license plate of a vehicle and respective members of the vehicle which is legally enrolled and registered each is provided with at least one of the member anti-fake means (3); a data input/output interface (302) of each of said member anti-fake means (3) is connected to a communication interface (13) of said microcomputer (1) via wires;
each of said information display (4) is mounted on a proper position of said vehicle and takes the form of an electronic information displaying means; each of said information display is respectively connected to said communication interface (13) of said microcomputer (1) via wires, and converts information which reflects legal status of said vehicle identity stored in said microcomputer (1) into information in a form which can be identified by sense of a person, under control of said microcomputer (1);
said microcomputer (1) is mounted on a proper position of said vehicle, and comprises a microprocessor (11), said memory (12) and a set of said communication interfaces (13); said communicator (2-1) is provided with a communication interface which is connected to said communication interface (13-6) of said microcomputer (1) via wires; a vehicle-mount information system centering on said microcomputer (1) for monitoring, reflecting legal status of said vehicle identity is formed by signal connection of said microcomputer (1) and each of said member anti-fake means(3), information displays (4) and communicators (2).

2. The motor vehicle identity anti-fake apparatus according to claim 1, **characterized in that** each of said member anti-fake means (3) is fixed on said license plate and each legally enrolled and registered member of said vehicle in a manner of sticking and covering seal.

3. The motor vehicle identity anti-fake apparatus according to claim 1, **characterized in that** each of said member anti-fake means (3) employs a chip and antenna of a noncontact IC card, and is in signal connection with said microcomputer (1) through a noncontact IC card read/write unit, wherein said noncontact IC card read/write unit is in signal connection with said chip and antenna of said concontact IC card in a radio frequency communication manner, a communication interface of said noncontact IC card read/write unit is connected to said communication interface (13) of said microcomputer (1) by wires; said noncontact IC card read/write unit is mounted within a valid range for communication with said antenna of said noncontact IC card; each of said member anti-fake means (3) can also be read by an external legal read/write unit while employing said chip and antenna of said concontact IC card.

4. The motor vehicle identity anti-fake apparatus according to claim 1, **characterized in that** said information displays (4) employ electroluminescence colorful light information displays (41) and are mounted on a position where color light signal can be directly and intuitively observed by a person outside said vehicle; wiring ports of said information displays (4) are connected to corresponding communication interfaces (13) of said microcomputer (1) via wires; under control of said microcomputer (1), said information displays (4) represent specific information of legal status of said vehicle identity by using different position relation, color or flicker frequency of the light.

5. The motor vehicle identity anti-fake apparatus according to claim 1, **characterized in that** said information display (4) employs an electrically sounding acoustic information display (42) which is mounted on a position where acoustic signal can be clearly heard by a person outside said vehicle; a wiring port of said electrically sounding information display (4) is connected to corresponding communication interface (13-8) of said microcomputer (1) via wires; under control of said microcomputer (1), said information display (4) represents that there currently exists a legal status of said vehicle identity by using acoustic signals.

6. The motor vehicle identity anti-fake apparatus according to claim 1, **characterized in that** said information display (4) employs a screen display (43); a communication interface of said information display (4) is connected to corresponding communication interface (13-7) of said microcomputer (1) via wires; under control of said microcomputer (1), said information display (4) represents a present information of vehicle identity status by using graphics and text.

7. The motor vehicle identity anti-fake apparatus according to claim 1, **characterized in that** it may further comprise a wireless remote communicator (2-2) having a communication interface which is connected to said communication interface (13-5) of said microcomputer (1) via wires.

8. The motor vehicle identity anti-fake apparatus according to claim 1, 3, 4, 5 or 7, **characterized in that** said member anti-fake means (3), microcomputer (1), colorful light information displays (41), acoustic information display (42) and communicator (2) are mounted and packaged within a license plate body (7), which body serves as a base and a casing of these components; said license plate body (7) employs insulating material, and sets windows on its front face for radiating color light signal outward by said colorful light information displays (41).

9. The motor vehicle identity anti-fake apparatus according to claim 1, 4, 5, 6 or 7, **characterized in that** said microcomputer (1), information displays (4) and communicators (2) are packaged within a cartridge being mounted on a position in front of a driver inside said vehicle where the cartridge can be directly observed from outside.

10. The motor vehicle identity anti-fake apparatus according to claim 4 or 5, **characterized in that** said colorful light information displays (41) and acoustic information display (42) are respectively connected to said microcomputer (1) through respective acoustooptic controllers (5), wherein a communication interface of each of said acoustooptic controllers (5) is respectively connected to said communication interface (13) of said microcomputer (1) via wires; an output port (503) of each of said acoustooptic controllers (5) is directly jointed to a wiring port of said colorful light information displays (41) or acoustic information display (42), and said connection port and said acoustooptic controllers (5) are packaged and sealed into an closed whole body by insulating material; and wherein
each of said acoustooptic controllers (5) is a microcomputer system having an acoustooptic drive module (502), comprising CPU, ROM, RAM, I/O, a communication interface (501), an acoustooptic drive module (502) and said output port (503).

11. A method for judging legality of identity of a vehicle by using the motor vehicle identity anti-fake apparatus according to claim 1, **characterized in that** said method comprises steps:
① judging legality of license plate and main members of the present vehicle, wherein:
each member anti-fake means (3) is respectively integrated with each of said license plates and legally enrolled and registered members of said vehicle to form a whole body, the microcomputer (1) uses each of said member anti-fake means and features of information stored in the microcomputer as feature signs for identifying identity of each of said license plates or legally enrolled and registered members of said vehicle; the memory (12) of the microcomputer (1) stores feature information of respective member anti-fake means and the part represented by the anti-fake means; when judging the legality of respective license plates or legally enrolled and registered members of said vehicle, said microcomputer (1) first extracts the information of said member anti-fake means (3) and enters it into said memory (12) of the microcomputer (1); then compares it with said previously stored feature information of respective member anti-fake means (3); if the comparison result is consistent, it indicates that the identity of the license plate or member as represented by said member anti-fake means is legal, if the comparison result is inconsistent or the feature information of some member anti-fake means does not exist, it means that the identity of corresponding license plate or member is illegal;
② judging whether the present vehicle has passed the verification and check with respect to stipulated items on schedule, wherein:
said microcomputer (1) retrieves time when related items passed the verification and check at the latest time and the period of validity of the items from vehicle archive information stored in said memory (12) of the microcomputer (1), and compares said period of validity with the present date of inner clock of the microcomputer; if the present date falls within the period of validity, it means that the vehicle has passed the verification and check with respect to stipulated items on schedule; otherwise, it means that the vehicle has not passed the verification and check with respect to stipulated items on schedule;
③judging whether the present vehicle has some special usage or not, wherein:
said microcomputer (1) retrieves and judges information on usage and period of validity thereof from the vehicle archive information stored in said memory (12), and if there exists some special usage and the present date falls within the period of validity, it means that the vehicle has a certain type of special usage; otherwise, no certain type of special usage exists;
④ judging to determine whether the present vehicle belongs to the motor vehicle particularly tracked by related enforcement organ, wherein:
the enforcement organ presets in said microcomputer (1) a calling cipher for the vehicle identity anti-fake apparatus of the particularly tracked vehicle; if the communicator (2) receives the calling cipher for the vehicle identity anti-fake apparatus of the particularly tracked vehicle, said microcomputer (1) compares the calling cipher with the calling cipher of the particularly tracked vehicle stored in its memory; if the comparison result is confirmative, it means that the present vehicle belongs to the motor vehicle particularly tracked by the related enforcement organ;
⑤judging whether the appearance color, pattern, configuration and size of the present vehicle are in conformity with those of in the enrollment and registration:
said microcomputer (1) stores real-time image or feature information of the present vehicle, which is transmitted from external detection station and received by said communicator (2), in said memory (12); said microcomputer (1) compares the received information with the image feature of the present vehicle in the vehicle archive information stored in said memory (12); if the comparison result is consistent, it means that the related items of the present vehicle are in conformity with those of in the enrollment and registration; otherwise, it means that these two are in no conformity.

12. The method according to claim 11, **characterized in that** the method for the motor vehicle identity anti-fake apparatus to transmit outward information which reflects legality status of the present vehicle identity comprises the following steps:
① a receiver (2) of respective communicator (2) of the motor vehicle identity anti-fake apparatus keeping being in a operation state under control of said microcomputer (1);
② after finding that said communicator (2) receive legal calling information from the management center or detection station, said microcomputer (1) storing said set of information into said memory (12);
③ said microcomputer (1) judging the newly-stored information and checking whether there exists a detection command or questioning query information in the newly-stored information;
④ if there exists, said microcomputer further judging identity authority of the person who detects or questions and queries;
⑤ based on the authority of the person who detects or questions and queries, a microprocessor (11) of said microcomputer (1) selecting necessary information according to predetermined program from information stored in the memory (12), which information includes operation records of conclusion and procedure of the monitoring made by the motor vehicle identity anti-fake apparatus on current legality status of the present vehicle identity, the vehicle archive information, records of the detection of the present vehicle made by the management center and the detection station on query items, procedure and time, and processing and generating reply information and controlling a transmitter of said communicator (2) to transmit the reply information.
